# EUROPEAN PATENT APPLICATION

(11) **EP 2 226 715 A2**
(43) Date of publication of application: **08.09.2010**
(21) Application number: 10154803.0
(22) Date of filing: 26.02.2010
(51) Int. Cl.: G06F 3/048, G11B 19/02, G11B 27/10, G11B 27/34, H04M 1/725

(54) **Music playback apparatus and method for music selection and playback**

(30) Priority: 02.03.2009 KR 20090017568
(71) Applicant: Pantech Co., Ltd., Seoul 121-792 (KR)
(72) Inventor: Choi, Gunsoo, Seoul 121-792 (KR)
(74) Representative: Herzog, Markus

(57) **Abstract**

A music playback apparatus displays a music file list on a touch screen and pre-plays a music file according to a touch input. If the touch input is removed, the pre-playing may stop. The processor may identify whether the touch input is long or short key signal, and may perform a playback process or a pre-play process on the music file. The processor may include a touch identifier to identify whether the touch down is the long key signal or the short key signal, a pre-listen executer to pre-play the music file, and a player manager to playback the music file. A method for playback may include pre-playing the music file when receiving a touch input or if a touch is received on a pre-listen icon corresponding to the music file, and stopping the pre-playing if the touch input is released or if the pre-listen icon is touched again.

## Description

### CROSS-REFERENCE TO RELATED APPLICATION

This application claims priority from and the benefit of Korean Patent Application No. 10-2009-0017568, filed on March 2, 2009, which is hereby incorporated by reference for all purposes as if fully set forth herein.

### BACKGROUND

FIELD OF THE INVENTION

This disclosure relates to music playback, and more particularly, to a music playback apparatus and a method for music selection and playback for selecting and pre-playing and playing a music file from among a number of music files displayed in a music file list through a touch screen.

DISCUSSION OF THE BACKGROUND

In general, a portable music playback apparatus for storing music files such as MP3 files is implemented to perform a selection operation for music playback according to information input via a keypad.

In addition, recently, music playback apparatuses have incorporated a touch screen to perform music playback according to an input via the touch screen. Additionally, mobile devices such as cellular telephones have incorporated music playback apparatuses using touch screens.

In order to playback music selected by a user among the available music stored in the touch screen adopted music playback apparatus, the user checks the desired music before the music is played back.

However, existing techniques for selecting and playing the desired music in the music playback apparatus are based on keypad input operations, and may not be adapted for the touch screen adopted music playback apparatus.

### SUMMARY

Exemplary embodiments of the present invention provide a touch screen adopted music playback apparatus and a music selection and playback method for selecting and pre-playing and playing a music file from among a number of music files listed on a music file list through a touch screen.

Additional features of the invention will be set forth in the description which follows, and in part will be apparent from the description, or may be learned by practice of the invention.

An exemplary embodiment of the present invention disclose a music playback apparatus including: a touch screen to display a music file list; and a processor to pre-play a music file if the music file is selected from the music file list by a touch-down, and to stop the pre-play if a touch-up occurs.

An exemplary embodiment of the present invention discloses a music playback apparatus, including: a touch screen to display a music file list; and a processor to identify whether a touch-down inputted to select a first music file from the music file list is a long key signal or a short key signal, and to perform a playback process or a pre-play process on the first music file according to the identification result.

An exemplary embodiment of the present invention discloses a method for music selection and playback, including: displaying a music file list on a touch screen; pre-playing a music file if the music file is selected from the music file list by a touch-down; and stopping the pre-playing if a touch-up occurs.

An exemplary embodiment of the present invention discloses a method for music selection and playback, including: displaying a music file list on a touch screen; pre-playing a music file if a first touch is received on a pre-listen icon corresponding to the music file; executing a player to play back the music file if a region of the touch screen corresponding to the music file is touched; and adding the music file to a play list for the player if a touch for adding the music file to the play list is input.

An exemplary embodiment of the present invention discloses a method for music selection and playback, including: displaying a music file list on a touch screen; receiving a touch-down on a region of the touch screen corresponding to a first music file; identifying whether the touch-down is a long key signal or a short key signal; and if the touch-down is identified as the long key signal, pre-playing the first music file.

It is to be understood that both the foregoing general description and the following detailed description are exemplary and explanatory and are intended to provide further explanation of the invention as claimed

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1A is a block diagram illustrating a music playback apparatus according to an exemplary embodiment.

FIG. 1B is a block diagram illustrating a music playback apparatus according to an exemplary embodiment.

FIG. 2 is a view illustrating a music selection and playback process according to an exemplary embodiment.

FIG. 3 is a view illustrating a music selection and playback process according to an exemplary embodiment.

FIG. 4A, FIG. 4B, FIG. 4C, and FIG. 4D are views illustrating touch screens and touch manipulation operations for explaining a music playback process according to an exemplary embodiment.

FIG. 5A, FIG. 5B, FIG. 5C, FIG. 5D, FIG. 5E, and FIG. 5F are views illustrating touch screens and touch manipulation operations for explaining a music playback process according to an exemplary embodiment.

FIG. 6 is a view illustrating a music playback process according to an exemplary embodiment.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the shape, size, and relative sizes of regions may be exaggerated for clarity. Like reference numerals in the drawings denote like elements.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. do not denote a limitation of quantity, but rather denote the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

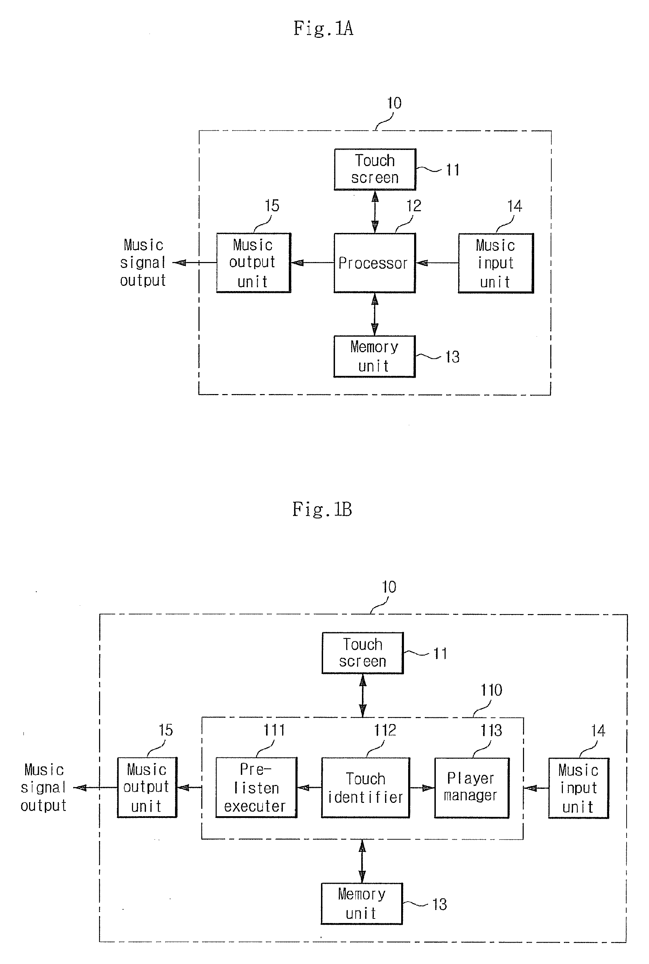

FIG. 1A is a block diagram illustrating a music playback apparatus according to an exemplary embodiment. Referring to FIG. 1A, a music playback apparatus 10 includes a touch screen 11, a processor 12, a memory unit 13, a music input unit 14, and a music output unit 15.

The touch screen 11 display images according to control of the processor 12 by receiving a touch input through the screen and applying the touch input information to the processor 12. The processor 12 performs processes for music playback according to programs. Specifically, it performs processes to output a display associated with music storing and playback, and to store the music or play back or pre-play the music on the basis of the touch input information input through the touch screen 11.

The music input unit 14 acquires music according to the control of the processor 12, and stores the acquired music in the memory unit 13 through the processor 12. The music input unit 14 may be connected to a communication network to acquire music through the communication network or may receive music inputted via a hardware or software input port to acquire music.

The memory unit 13 stores programs for operating the music playback apparatus 10 to provide them to the processor 12, and stores the music inputted through the processor 12 from the music input unit 14 or outputs the stored music according to the control of the processor 12. The memory unit 13 may store music in an MP3 file format or the like.

The music output unit 15 outputs the music played by the processor 12. Specifically, it outputs the played music to the user by outputting the played analog music signal through a speaker or an earphone.

The processor 12 outputs the analog music signal acquired by performing the process for music playback through the music output unit 15. Specifically, it performs a pre-play process and a playback process with a player according to a command received through the touch screen 11.

In the case of the pre-play process, the processor 12 performs the pre-play process through a pre-listen player corresponding to a pre-listen playback program, which plays only a single selected music file for pre-listening. In the case of the playback process performed by the player, the processor 12 performs the playback process with the player corresponding to a music playback program which adjusts and plays a number of the selected music files, such as in a playlist, in various manners. When the processor 12 performs the pre-play process, only a single music file selected by the user is played, and only simple adjusting processes such as volume control, fast forward, and rewind according a gesture input of the user through the touch screen 11 may be performed.

On the other hand, when the playback process is performed by the player, a graphical user interface (GUI) for the music playback adjustment of the user is provided on the touch screen 11. The user may adjust various control items for music control including volume control, balancing between left and right, equalizing, and the like through the GUI provided on the touch screen 11, and may playback a number of music files listed in a play list.

The processor 12 stores the music file acquired through the music input unit 14 in the memory unit 13. When the user selects a content box displayed on the touch screen 11 with a touch input, the processor 12 executes the content box to display a list or play list of the music files stored in the memory unit 13 on the touch screen 11, and performs the pre-play process on the music file selected by the user from the displayed music file list. The user selects a music file from the music file list of the content box and may pre-listen to the music file.

While the processor 12 pre-plays the music file in the content box according to the command received through the touch screen 11, it may then playback the corresponding music file with the player or add the corresponding music file to a play list, so that the user may select a desired music file through the touch screen 11 for playback.

The processor 12 controls the touch screen 11 to display the music file list while the content box is executed. When the user touches (referred to as a touch-down) a selected music file name of the music file list displayed on the touch screen 11, the processor 12 may pre-play the music file selected by the touch-down to output it through the music output unit 15. The touch-down is a state in which the user presses the touch screen by using a finger or an object such as a touch pen.

And when the user touches up (i.e. releases the touch) in a region other than the region of the touched-down music file after touching down the music file of the music file list displayed on the touch screen 11, the processor 12 of the music playback apparatus 10 stops the pre-playing and returns to display the music file list of the content box on the touch screen 11. The touch-up is a state in which the user removes the finger or object after pressing the touch screen with it.

The processor 12 of the music playback apparatus 10 displays the music file list on the touch screen 11 while the content box is executed, and may display a pre-listen icon corresponding to a music file. When the user touches the pre-listen icon displayed through the touch screen 11, the processor 12 pre-plays the music file corresponding to the touched pre-listen icon to output the music file through the music output unit 15.

When the processor 12 of the music playback apparatus 10 receives a gesture, which may be specified in advance or set by the user, through the touch screen 11 while pre-playing the music file, the processor 12 may perform processes such as volume control, fast forward, and rewind on the music that has been pre-listened to. Here, the music file that has been pre-played is a music file corresponding to the touched pre-listen icon.

When the user touches the music file through the touch screen 11 while the music file has been pre-played, the processor 12 of the music playback apparatus 10 stops pre-playing the music file, and may display the music file list of the content box on the touch screen 11. Here, the music file that has been pre-played is a music file corresponding to the touched pre-listen icon.

When a touch input for adding a file to the play list occurs through the touch screen 11 while the processor 12 of the music playback apparatus 10 pre-plays the music file corresponding to the touched pre-listen icon, the music file that has been pre-played may be added to the play list.

FIG. 1B is a block diagram illustrating a music playback apparatus according to an exemplary embodiment.

Referring to FIG. 1B, a music playback apparatus 10 includes a touch screen 11, a memory unit 13, a music input unit 14, a music output unit 15, and a processor 110. The touch screen 11, memory unit 13, music input unit 14, and music output unit 15 correspond substantially to those components as described with respect to the embodiment illustrated in FIG. 1A. Therefore, FIG. 1B will be described with emphasis on the configuration of the processor 110.

When the user selects a music file from the music file list displayed on the touch screen 11 through a touch-down, the processor 110 identifies whether the touch-down inputted through the touch screen 11 is a long key signal or a short key signal. The processor 110 selectively performs a playback process or a pre-play process on the music file selected by the user according to the identification result of the touch-down as a long key signal or a short key signal.

For this operation, the processor may include a touch identifier 112, a pre-listen executer 111, and a player manager 113.

When the user inputs the touch-down for selecting the music file through the touch screen 11, the touch identifier 112 identifies whether the touch-down inputted by the user is a long key signal or a short key signal, and operates the pre-listen executer 111 or the player manager 113 according to the identification result.

When the touch-down inputted through the touch screen 11 is identified as the long key signal, the pre-listen executer 111 displays the music file list on the touch screen 11, and pre-plays the music file selected by the user to be pre-listened to.

When the touch-down inputted through the touch screen 11 is identified as the short key signal, the player manager 113 executes and displays the player on the screen to playback the music file selected by the user.

If a new music file is selected while the selected music file is pre-played, the processor 110 stops the pre-play of the selected music file, and may perform pre-play on the newly selected music file. In addition, when a touch-up is inputted while the selected music file is pre-played, the processor 110 may stop pre-playing the corresponding music file and return to its original mode to display the music file list.

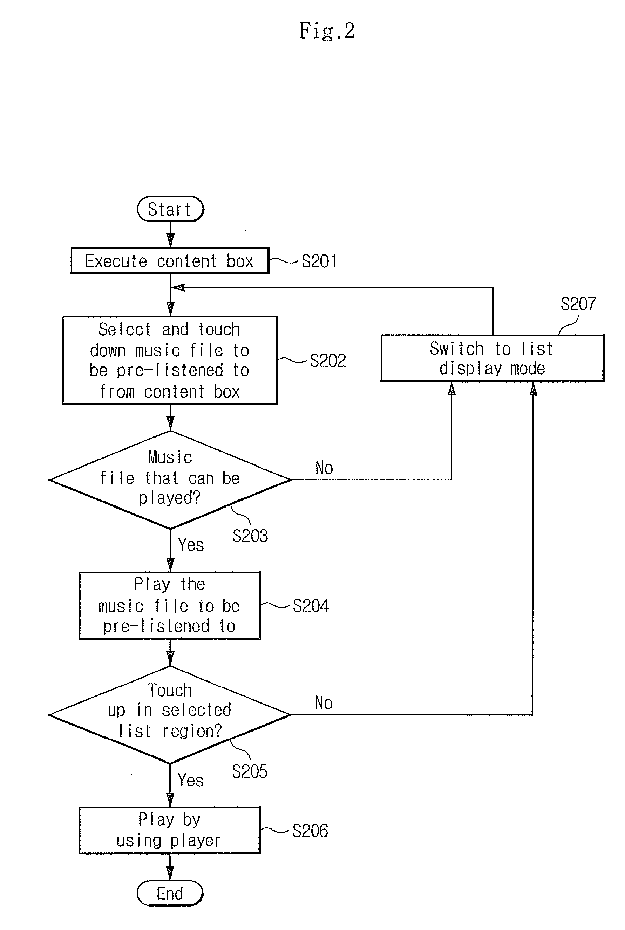

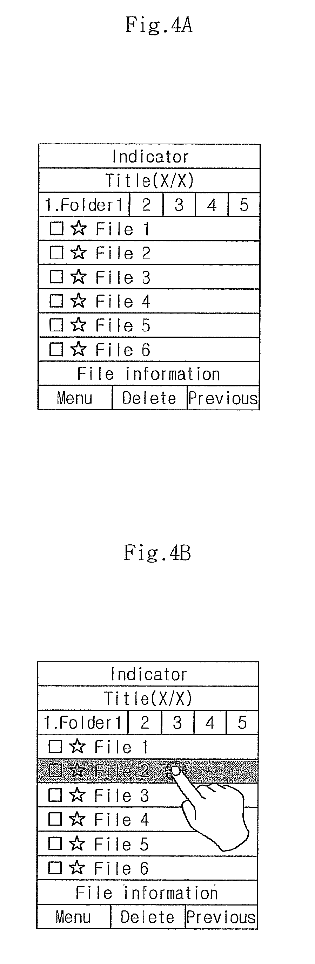

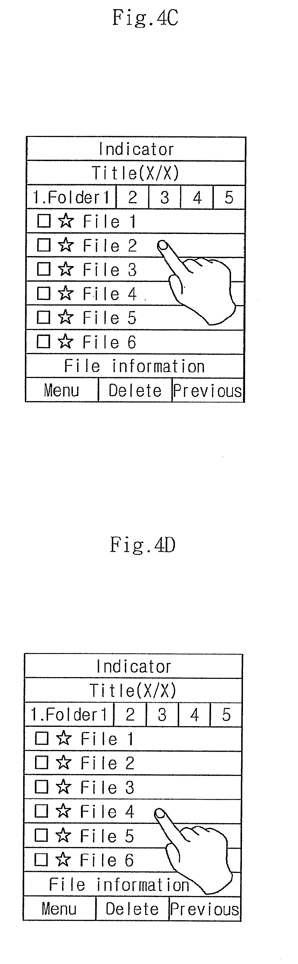

FIG. 2 is a view illustrating a music selection and playback process according to an exemplary embodiment. FIG. 4A, FIG. 4B, FIG. 4C, and FIG. 4D are views illustrating touch screens and touch manipulation operations for explaining a music playback process according to an exemplary embodiment. The music playback apparatus of FIG. 1A may be used to perform the process, and will be described as such for convenience and without limitation.

Referring to FIG. 2, the processor 12 of the music playback apparatus 10 executes the content box according to a command through the touch screen 11, and displays the music file list on the touch screen 11 (S201). The music file list may be displayed as illustrated in FIG. 4A.

The user may touch down a music file in the music file list displayed on the touch screen 11 by pressing the touch screen 11 with a fmger or object as illustrated in FIG. 4B, and selects a music file to be pre-played (S202). Thereafter, the processor 12 of the music playback apparatus 10 checks whether or not the selected music file is a music file that can be played (S203).

If the selected music file is identified as a music file that can be played, the processor 12 of the music playback apparatus 10 pre-plays the selected music file from the beginning to output it through the music output unit 15 so that the user may pre-listen to the music file (S204).

The processor 12 of the music playback apparatus 10 checks whether the user touches up by detaching a finger or object from the selected music file list region through the touch screen 11 as illustrated in FIG. 4C while the music file is pre-played (S205).

If the processor 12 of the music playback apparatus 10 determines that the user touches up in the selected music file list area through the touch screen 11, it executes the player to play the music file that has been pre-played to output it through the music output unit 15 (S206).

If it is determined in S203 that the selected music file is a music file that cannot be played, the processor 12 of the music playback apparatus 10 checks whether the user touches up in the region other than the touched-down music file list region as illustrated in FIG. 4D. If so, the processor 12 switches to a mode for displaying the music list of the content box (S207), and returns to S202 described above.

If in S205 the processor 12 of the music playback apparatus 10 determines that the user touches up in a region other than the music file list region touched-down by the user, the processor 12 stops pre-play, switches to the mode for displaying the music list of the content box, and returns to S202 described above.

As described above, in a music selection and playback process, the music file list is displayed on the touch screen 11 while the content box is executed, and the music file selected through the touch screen by the user from the music file list is pre-played through the music output unit 15. After the music file list is pre-played, the user may input a selection through the touch screen 11 to playback the corresponding music with the player.

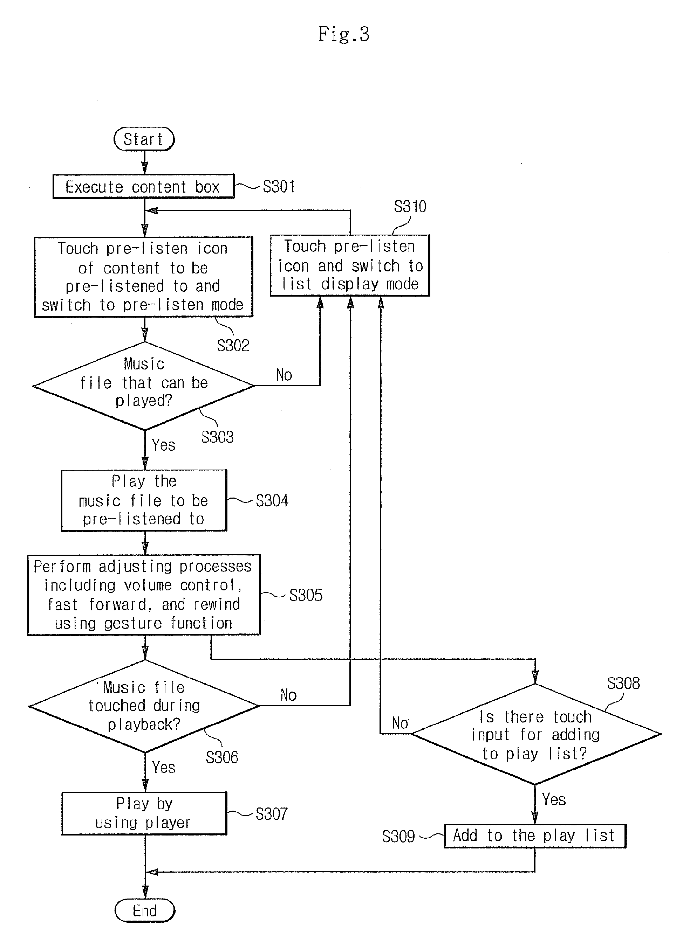

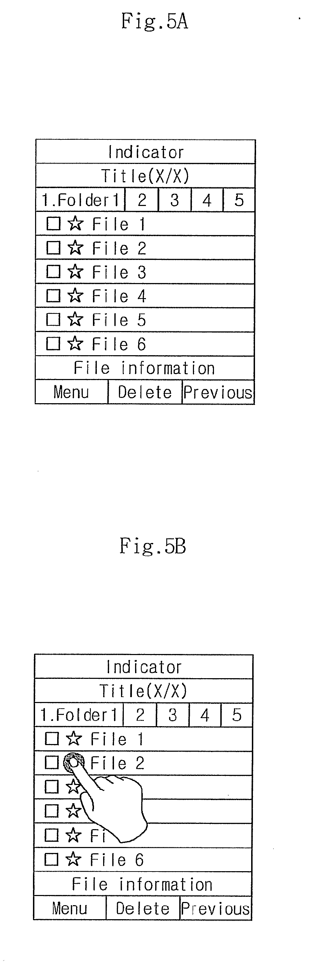

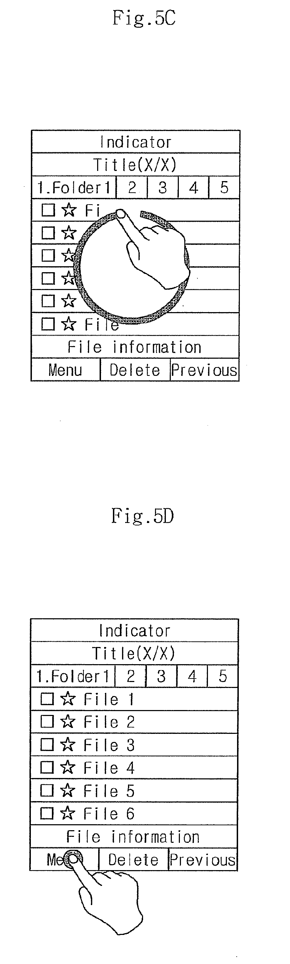

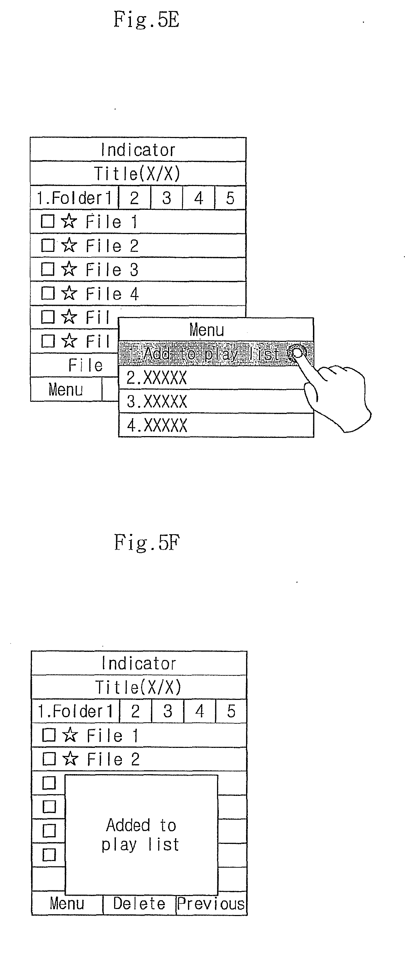

FIG. 3 is a view illustrating a music selection and playback process according to an exemplary embodiment. FIG. 5A, FIG. 5B, FIG. 5C, FIG. 5D, FIG. 5E, and FIG. 5F are views illustrating touch screens and touch manipulation operations for explaining a music playback process according to an exemplary embodiment. The music playback apparatus of FIG. 1A may be used to perform the process, and will be described as such for convenience and without limitation.

Referring to FIG. 3, the processor 12 of the music playback apparatus 10 executes the content box according to the command of the user through the touch screen 11, displays the music file list on the touch screen 11, and displays a pre-listen icon together with the music file (S301). The music file list may be displayed on the touch screen 11 as illustrated in FIG. 5A.

If the user touches and selects the pre-listen icon of the music file listed in the music file list displayed on the touch screen 11 by touching the touch screen 11 with a finger or object as illustrated in FIG. 5B, the processor 12 of the music playback apparatus 10 switches to the pre-play mode (S302).

In the pre-play mode described above, the processor 12 of the music playback apparatus 10 checks whether the music file corresponding to the touched pre-listen icon is a music file that can be played (S303).

If so, the processor 12 performs pre-play on the music file corresponding to the touched pre-listen icon from the beginning. The music which has been pre-played is outputted through the music output unit 15, thereby providing a pre-listening service for the user (S304).

While performing the pre-play, when the user inputs a gesture by using a finger or a touch pen through the touch screen 11, such as the gesture illustrated in FIG. 5C, the processor 12 of the music playback apparatus 10 performs an adjustment process such as volume control, fast forward, and/or rewind on the music that has been pre-played through a corresponding gesture function (S305).

The processor 12 of the music playback apparatus 10 also checks whether the user touches the music file that has been pre-played in the music file list through the touch screen 11 during the pre-play (S306). If the user touches the music file that has been pre-played in the music file list through the touch screen 11, the processor 12 executes the player to playback the music file to output it through the music output unit 15 (S307).

In addition, the processor 12 of the music playback apparatus 10 checks whether the user inputs a touch for adding a music file to the play list through the touch screen 11 while the music file is pre-played (S308). When the processor 12 recognizes the touch input of the user for adding the file to the play list, it adds the music file that has been pre-played to the play list for playing back music (S309). To perform the process of adding the file to the play list, the processor 12 of the music playback apparatus 10 checks whether the user touches a menu through the touch screen 11 while the music file list is displayed on the touch screen 11, such as illustrated in FIG. 5D. If the user's touch is detected, the processor 12 displays a pop-up menu for displaying the menu list on the touch screen 11, such as illustrated in FIG. 5E, detects a selection of the user, such as a touch on the menu "Add to the play list" listed in the pop-up menu, and checks the touch input for performing the selected action, such as adding the file to the play list through the touch screen 11. And if the processor 12 of the music playback apparatus 10 detects that the user touches and selects the menu "Add to the play list" listed in the pop-up menu, it adds the music file that has been pre-played to the play list. Then, the processor 12 displays a pop-up window for notifying that the selected action has occurred, such as the music file that has been pre-played is added to the play list on the touch screen 11 as illustrated in FIG. 5F, and terminates the selected process.

If the music file selected in S303 is a music file that cannot be played, the processor 12 checks whether a touch is inputted. If the user touches the pre-listen icon of the music file through the touch screen 11, the processor 12 switches to the mode for displaying the music list of the content box (S310), and returns to S302 described above.

In S306 described above, if the processor 12 determines that the user does not touch the music file that has been pre-played in the music file list through the touch screen 11, and instead touches the pre-listen icon of the music file through the touch screen 11 (S310), then the processor 12 stops pre-play, switches to the mode for displaying the music list of the content box, and returns to S302 described above.

As described above, if the user touches the pre-listen icon of the music file listed in the music file list displayed on the touch screen 11, the music playback apparatus 10 pre-plays the selected music file to output it through the music output unit 15. The selected music file may then be played with the player by the selection of the user through the touch screen 11, and according to a touch input of the user for adding to the play list through the touch screen 11, the music file that has been pre-played may be added to the play list.

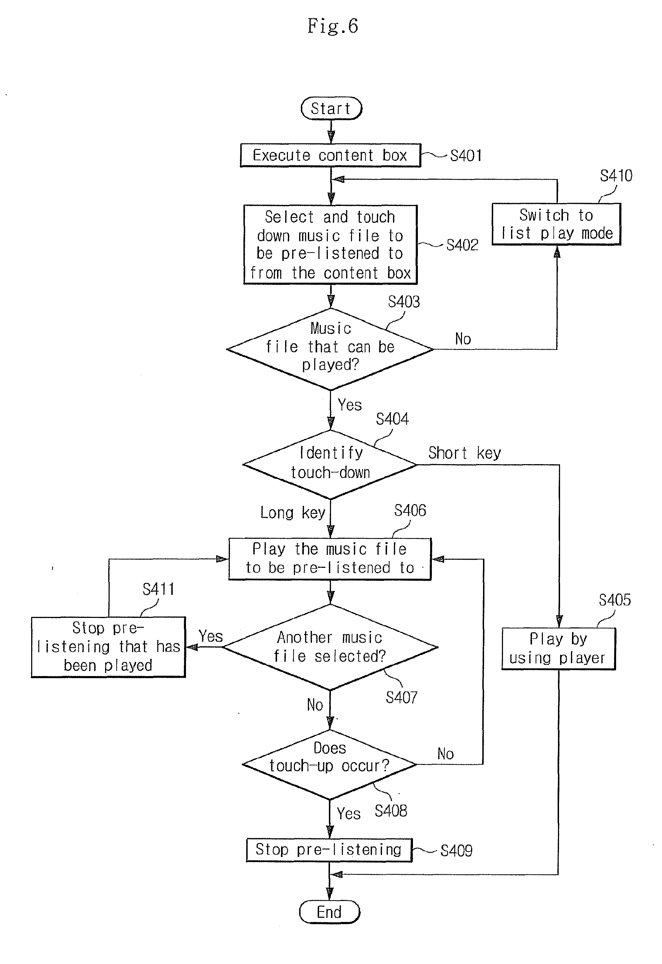

FIG. 6 is a view illustrating a music playback process according to an exemplary embodiment. The music playback apparatus of FIG. 1B may be used to perform the process, and will be described as such for convenience and without limitation.

Referring to FIG. 6, a processor 110 executes a content box according to an input through the touch screen 11 and displays a music file list on the touch screen 11 (S401).

Thereafter, if the user selects a music file by performing a touch-down while the music file list is displayed on the touch screen 11 (S402), the processor 110 checks whether the selected music file is a music file that can be played (S403).

If the selected music file is a music file that cannot be played, the processor 110 returns to display a music file list on the touch screen 11 (S410).However, if the selected music file is a music file that can be played, the processor 110 identifies whether the touch-down input is a long key signal or a short key signal (S404).

If the user performs a long touch to generate a long key signal, that is, if the touch-down is identified as the long key signal, the processor 110 pre-plays the selected music file from the beginning to output it through the music output unit 15 (S406).

Then, the processor 12 checks whether the user touches down in a different region of the touch screen to select a new music file while the music file selected by the touch-down of the user through the screen is pre-played (S407).

If the user selects a new music file during the pre-play, the processor 110 stops the pre-play of the first selected music file (S411) and pre-plays the newly selected music file from the beginning (S406).

The processor 110 checks whether a touch-up is inputted while the music file selected by the touch-down is pre-played (S408). If the touch-up occurs in S408, the processor 110 stops pre-play of the music file, and switches to the list display mode for displaying the music list of the content box (S409). If the selected music file is a music file that cannot be played in S403 described above, the processor 110 also returns to the list display mode of S401 and is on standby (S410).

Returning back to S404, if the user selects the music file with a light touch, the processor 110 operates the player to be in the foreground, and plays the selected music file (S405). S405 is executed when the touch-down is identified as the short key signal as the user touches up after performing a touch-down for a short time.

As described above, the processor 110 identifies a long key/short key signal when the touch-down occurs. When a long touch is inputted as a long key signal, the processor 110 performs pre-play, and when the user touches up by removing the touch during the pre-play, the processor 110 stops the pre-play. When a light touch is inputted as a short key signal, basic playback of the selected music file is executed through the player.

That is, if the user touches up after performing the touch-down on the music file with the short key, the processor 110 executes the player and plays the selected music file. However, if the user performs the touch-down with the long key, the processor 110 performs pre-play. In this case, since the processor 110 recognizes that the long key signal is inputted, it finishes only the pre-play without executing the player.

According to this exemplary embodiment, when the user touches the touch screen 11, pre-play of the selected music file is executed. If the next music file is touched where the user does not remove the touch, pre-play of the next music file is executed, and when the touch is removed from the touch screen 11, the pre-play is stopped.

As described above, in a music playback apparatus, a desired music file may be selected and pre-played or normally played back by a manual operation through the touch screen.

The exemplary embodiments may be applied to music playback apparatuses using a touch screen as a user interface. Accordingly, a desired music file may be selected and pre-played or normally played back by a manual operation through the touch screen.

While the exemplary embodiments have been shown and described, it will be understood by those skilled in the art that various changes in form and details may be made thereto without departing from the spirit and scope of this disclosure as defined by the appended claims and their equivalents.

In addition, many modifications can be made to adapt a particular situation or material to the teachings of this disclosure without departing from the scope thereof. Therefore, it is intended that this disclosure not be limited to the particular exemplary embodiments disclosed as the best mode contemplated for carrying out this disclosure, but that this disclosure will include all embodiments falling within the scope of the appended claims and their equivalents.

A music playback apparatus displays a music file list on a touch screen and pre-plays a music file according to a touch input. If the touch input is removed, the pre-playing may stop. The processor may identify whether the touch input is long or short key signal, and may perform a playback process or a pre-play process on the music file. The processor may include a touch identifier to identify whether the touch down is the long key signal or the short key signal, a pre-listen executer to pre-play the music file, and a player manager to playback the music file. A method for playback may include pre-playing the music file when receiving a touch input or if a touch is received on a pre-listen icon corresponding to the music file, and stopping the pre-playing if the touch input is released or if the pre-listen icon is touched again.

## Claims

1. A music playback apparatus, comprising:
a touch screen to display a music file list; and
a processor to performs a playback process or a pre-play process on a music file according to a type of a touch inputted in order to select the music file from the music file list.

2. The apparatus of claim 1, wherein the processor pre-plays the music file if the music file is selected from the music file list by a touch-down, and stops the pre-play if a touch-up occurs.

3. The apparatus of claim 2, wherein the processor executes a player to play back the music file if the touch-up occurs in a first region of the touch screen corresponding to the music file.

4. The apparatus of claim 3, wherein the processor stops pre-playing the music file and returns to display the music file list if the touch-up occurs in a second region of the touch screen other than the first region.

5. The apparatus of claim 1, wherein the processor identifies whether a touch-down inputted to select the music file from the music file list is a long key signal or a short key signal, and performs a playback process or a pre-play process on the music file according to the identification result.

6. The apparatus of claim 5, wherein the processor comprises:
a touch identifier to identify whether the touch down is the long key signal or the short key signal;
a pre-listen executer to pre-play the music file if the touch-down is identified as the long key signal; and
a player manager to playback the music file if the touch-down is identified as the short key signal.

7. The apparatus of claim 5, wherein the processor performs the pre-play process on the music file while the touch-down is inputted.

8. A method for music selection and playback, comprising steps of:
(a) displaying a music file list on a touch screen; and
(b) when a touch is inputted in order to select a music file from the music file list, performing a playback process or a pre-play process on the music file according to a type of the touch.

9. The method of claim 8, wherein the step(b) comprises:
pre-playing a music file if the music file is selected from the music file list by a touch-down; and
stopping the pre-playing if a touch-up occurs.

10. The method of claim 9, wherein the step (b) further comprises executing a player to play back the music file if the touch-up occurs in a first region of the touch screen corresponding to the music file.

11. The method of claim 10, wherein the step (b) further comprises stopping the pre-playing and displaying the music file list if the touch-up occurs in a second region of the touch screen other than the first region.

12. The method of claim 8, wherein the step (b) comprises:
pre-playing a music file if a first touch is received on a pre-listen icon corresponding to the music file; and
executing a player to play back the music file if a region of the touch screen corresponding to the music file is touched.

13. The method of claim 12, further comprising a step (c) of adding the music file to a play list for the player if a touch for adding the music file to the play list is input.

14. The method of claim 12, wherein the step (b) further comprises performing an adjusting process comprising at least one of volume control, fast forward, and rewind of the music file according to a gesture received through the touch screen while the music file is pre-playing.

15. The method of claim 8, wherein the step (b) comprises:
receiving a touch-down on a region of the touch screen corresponding to a first music file;
identifying whether the touch-down is a long key signal or a short key signal;
if the touch-down is identified as the long key signal, pre-playing the first music file; and
executing a player to play the first music file if the touch-down is identified as the short key signal.
